# EUROPEAN PATENT SPECIFICATION

(11) **EP 4 129 624 B1**
(45) Date of publication and mention of the grant of the patent: **26.03.2025**
(21) Application number: 20929169.9
(22) Date of filing: 20.06.2020
(51) Int. Cl.: B29C 53/04, B29C 53/80, H01M 50/105, H01M 10/04, H01M 50/20, B21D 19/02, B21D 19/12, B21D 19/08, H01M 50/183, B21D 11/20

(54) **POUCH BENDING GUIDE APPARATUS AND POUCH BENDING METHOD FOR SECONDARY BATTERY PACKAGING SYSTEM**
BEUTELBIEGEFÜHRUNGSVORRICHTUNG UND BEUTELBIEGEVERFAHREN FÜR SEKUNDÄRBATTERIEVERPACKUNGSSYSTEM
APPAREIL DE GUIDAGE DE PLIAGE DE POCHE ET PROCÉDÉ DE PLIAGE DE POCHE POUR SYSTÈME DE CONDITIONNEMENT DE BATTERIE SECONDAIRE

(30) Priority: 02.04.2020 KR 20200040222
(43) Date of publication of application: 08.02.2023
(73) Proprietor: SK On Co., Ltd., Seoul 03161 (KR)
(72) Inventor: KIM, Jong Sung, Seongnam-si Gyeonggi-do 13588 (KR); PARK, Hui Jin, Cheongju-si Chungcheongbuk-do 28124 (KR); JEONG, Bong Uk, Gunwi-gun Gyeongsangbuk-do 39031 (KR); AHN, Ji Eun, Yuseong-gu, Daejeon (KR); KIM, Wook Kyoung, Yuseong-gu, Daejeon (KR); PARK, Sang Jun, Yuseong-gu, Daejeon (KR)
(74) Representative: Prüfer & Partner mbB Patentanwälte · Rechtsanwälte
(86) International application number: PCT/KR2020/008021
(87) International publication number: WO 2021/201337

(56) References cited:
- EP-A1- 3 035 432
- KR-A- 20150 049 969
- KR-A- 20150 049 969
- KR-A- 20160 049 709
- KR-A- 20180 028 200
- KR-A- 20190 024 755
- KR-B1- 101 858 680
- KR-B1- 102 015 898
- US-A1- 2020 035 982

## Description

### Technical Field

The present disclosure relates generally to pouch bending guide apparatus and pouch bending method for a secondary battery packaging system. More particularly, the present disclosure relates to pouch bending guide apparatus and pouch bending method for a secondary battery packaging system in which during the folding of a pouch, a bending lateral surface of the pouch can be prevented from being deformed concavely. The present disclosure relates to the bending of a pouch for a secondary battery packaging system, and is intended to prevent a bending portion of the pouch from being moved to the inside of a main chamber by using a bending knife. The prevention of the bending portion of the pouch from being moved to the inside of the main chamber means to prevent a bending lateral surface on one side of the pouch from being pushed to the inside of the pouch when forming the pouch by folding a pouch sheet.

### Background Art

A secondary battery can be recharged and can be small and large-capacity. The secondary battery may be a can-type secondary battery or pouch-type secondary battery according to the shape of an outer casing of the secondary battery, wherein the pouch-type secondary battery consists of a battery cell having an electrode tab formed on one side of an electrode plate, and a pouch that covers and seals the electrode plate so that the electrode tab is drawn out of the pouch. The battery cell has a separator interposed between a plurality of positive and negative electrode plates, and the battery cell is mounted and sealed inside the pouch, and the electrode tab on one side of the battery cell is drawn out of the pouch. A battery having a battery cell mounted in the pouch is referred to as a pouch-type secondary battery.

In this case, when forming the pouch in which the battery cell is mounted, the center part of a pouch sheet having half battery cell receiving parts is folded and the battery cell is mounted in the battery cell receiving part of the inside of the pouch.

However, while folding and bending the center part of the pouch sheet, the center part of the pouch sheet is pushed inward, and a bending lateral surface of the pouch is deformed concavely inward. That is, when the pouch sheet is folded, the bending lateral surface of the pouch 2 is moved inward and is deformed concavely.

In the case of a battery without a bottom, while a pouch is bent, a bending portion of the pouch is moved to the inside of a main chamber, and thus the size of the main chamber decreases. The movement of the bending portion of the pouch to the inside of the main chamber means that when forming the pouch by folding the pouch sheet, a bending lateral surface on one side of the pouch 2 is pushed to the inside of the pouch. Accordingly, during the bending of the pouch 2, the bending portion of the pouch is moved to the inside of the main chamber, and thus the size of the main chamber of the pouch decreases.

In addition, when the bending lateral surface of the pouch is deformed concavely inward, heat generated during the charging/discharging of the battery cell of a secondary battery is not efficiently discharged. A plurality of pouches (hereinafter, referred to as a pouch for convenience) in which battery cells are mounted is placed by standing side by side on a hanger frame, and the bending lateral surface of each of the pouches is in contact with a heat sink (which may be a metal plate having high thermal conductivity, for example, an aluminum plate) provided on the lower part of the hanger frame. In this state, heat generated in the pouch during the charging/discharging of the battery cell is transmitted from the bending lateral surface to the heat sink to be discharged. When the pouch has a concave deformation part formed in such a manner that the bending lateral surface of the pouch is recessed inward, the concave deformation part is not efficiently in contact with the heat sink. Accordingly, heat generated in the pouch during the charging/discharging of the battery cell is not efficiently transmitted from the bending lateral surface to the heat sink, and thus heat generated in the pouch during the charging/discharging of the battery cell is not efficiently discharged, and when the heat discharge from the pouch is not efficiently performed, the battery cell deteriorates or catches fire due to heat.

US 2020/0035982 discloses an apparatus for bending a current breaking member of a battery pack comprising a bending jig 210, a rotation driving unit 220, and a bending guide unit 230. The bending guide unit 230 of US 2020/0035982 is configured to press and fix an electrode lead 112 so that a bending line B for dividing a bent portion and a non-bent portion of the electrode lead 112 is set. However, the bending guide unit 230 of US 2020/0035982 does not contribute to widen a bending lateral surface of pouches, but only sets the position of the bent portion of the electrode lead 112.

KR 2015 0049969 discloses an apparatus for folding a PCM comprising a jig 100, a folding unit 200, a pressing unit 300, a pressurization unit 400, and a guide unit 500. A pressurization block 410 which is a part of the pressurization unit 400 is a plate with a predetermined thickness, which can be installed so that its lower surface is in contact with an upper surface of a tab 11 of a battery cell 10. However, the pressurization block 410 does not contribute to widen a bending lateral surface of pouches, but only presses the upper surface of the tab 11.

EP 3 035 432 discloses a battery cell bending apparatus comprising a heating member. The battery cell bending apparatus of EP 3 035 432 comprises a base plate, on which a battery cell is loaded, and a pair of bending guides inserted respectively between left and right outer edges of a battery case and an outer surface of an electrode assembly receiving part in a state in which the battery cell is loaded on the base plate. However, the bending guides do not contribute to widen a bending lateral surface of the battery case.

### Disclosure

### Technical Problem

The present disclosure is intended to propose pouch bending guide apparatus and pouch bending method for a secondary battery packaging system having a new configuration in which a bending lateral surface of a pouch can be prevented from being deformed concavely in the bending process of folding a bending jig toward a base jig after a battery cell is placed on a pouch sheet, and heat generated during the charging/discharging of the battery cell of a secondary battery can be efficiently discharged from the pouch. That is, the present disclosure is mainly intended to prevent the bending lateral surface of the pouch from being recessed inward in the process of bending the pouch sheet to mount a battery cell in the pouch.

### Technical Solution

In order to accomplish the above objectives, according to the present disclosure, there is proposed a pouch bending guide apparatus, for a secondary battery packaging system, which folds a pouch sheet while a bending jig is folded toward a base jig with the pouch sheet placed on the base jig and the bending jig, the apparatus including: a bending knife which supports, from an inside of a pouch, a bending lateral surface of the pouch formed while the pouch sheet is folded by the bending jig.

### Advantageous Effects

According to the present disclosure, while folding and bending the center part of the pouch sheet, the center part of the pouch sheet is prevented from being pushed inward, thereby preventing the bending lateral surface of the pouch from being deformed concavely inward.

In addition, the bending lateral surface of the pouch is prevented from being pushed inward, thereby improving the exterior quality and reliability of the pouch.

### Description of Drawings

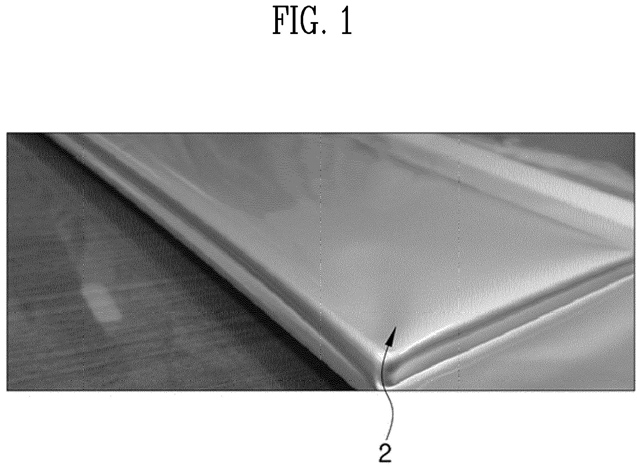

FIG. 1 is a picture showing a portion of a pouch having a concave deformation part formed in such a manner that a bending lateral surface of the pouch according to a conventional technology is recessed inward.

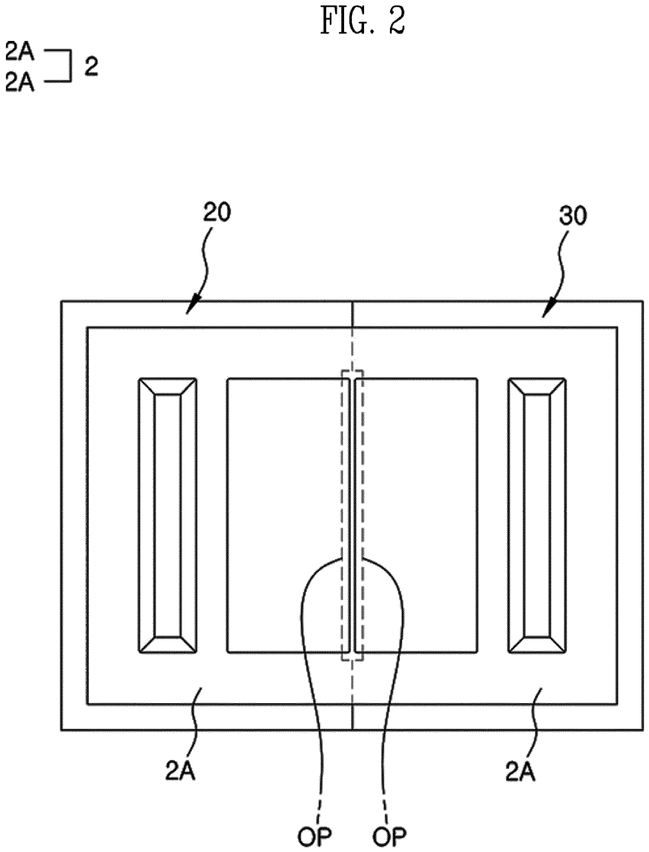

FIG. 2 is a top plan view showing the unfolded state of a base jig and a bending jig which are main parts of a pouch bending guide apparatus for a secondary battery packaging system according to the present disclosure, and a state in which a pouch sheet is placed by being unfolded on the base jig and the bending jig.

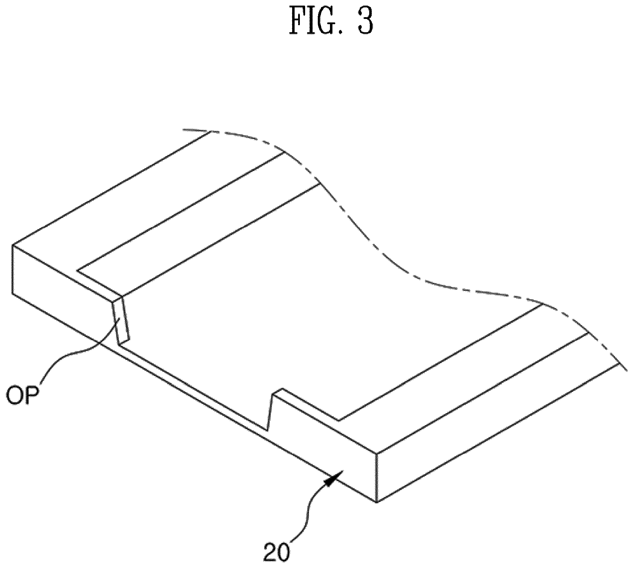

FIG. 3 is a perspective view showing a portion of the bending jig shown in FIG. 2.

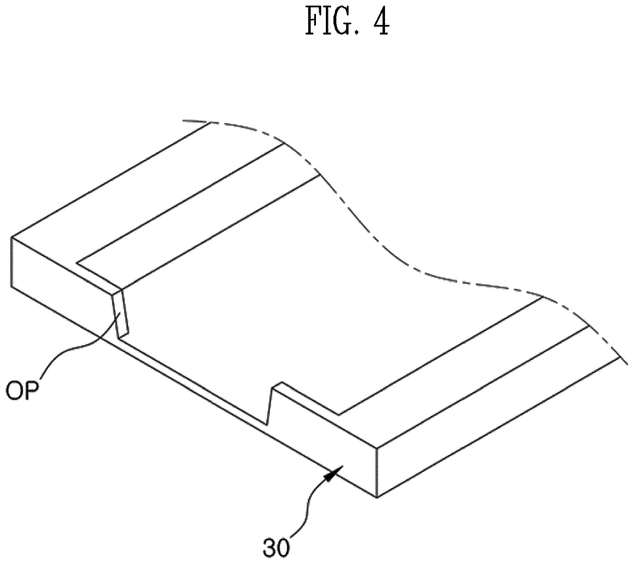

FIG. 4 is a perspective view showing a portion of the base jig shown in FIG. 2.

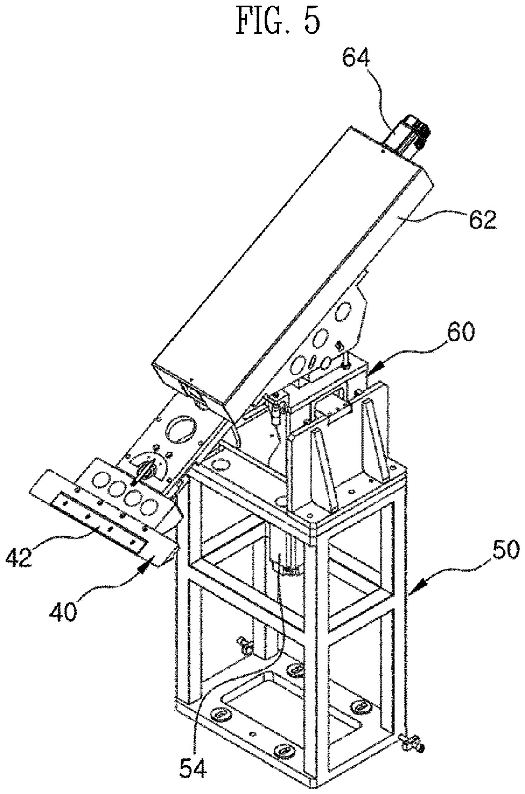

FIG. 5 is a perspective view showing a bending knife which is a main part of the pouch bending guide apparatus of the present disclosure.

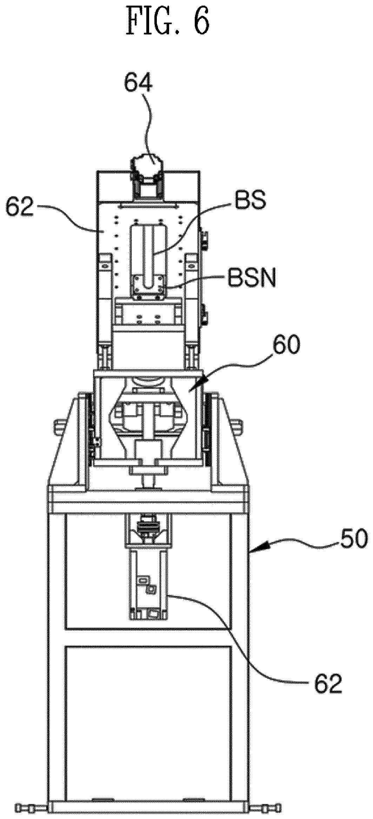

FIG. 6 is a rear view of FIG. 5.

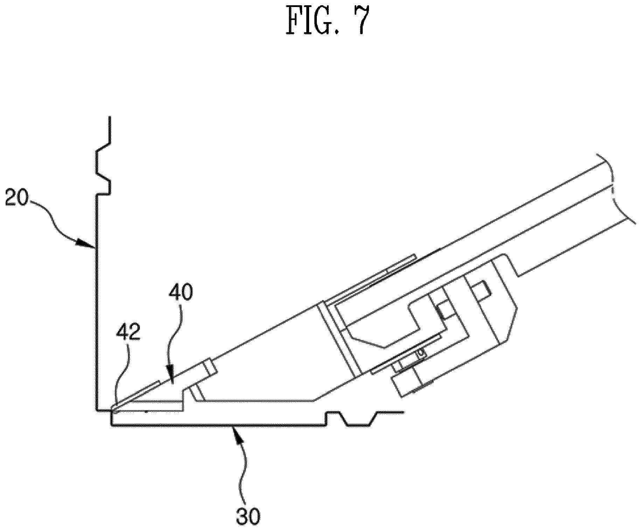

FIG. 7 a side view showing a state in which the bending knife is moved to the inside of the pouch sheet while the bending jig shown in FIG. 2 is folded toward the base jig.

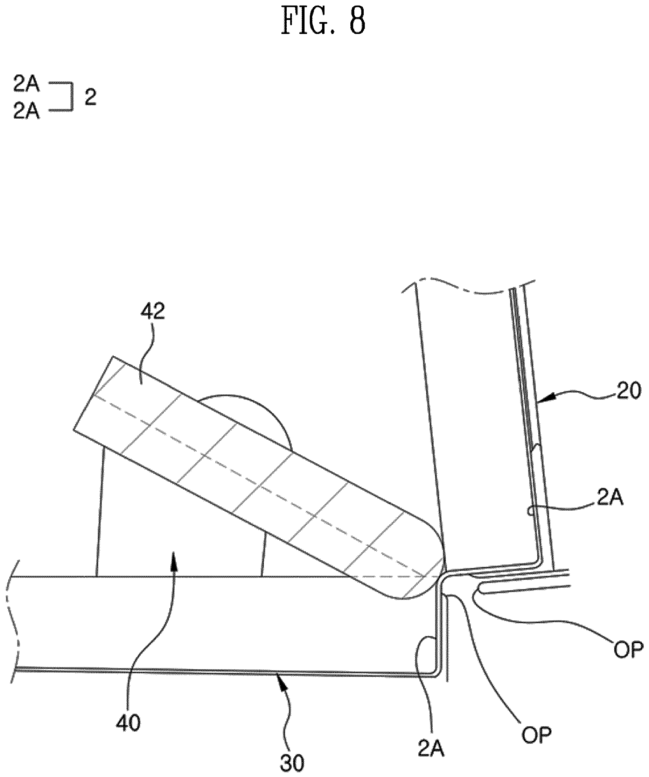

FIG. 8 is an enlarged side view showing a state before a stopper is in contact with the bending lateral surface of a pouch when forming the pouch by folding the pouch sheet shown in FIG. 7.

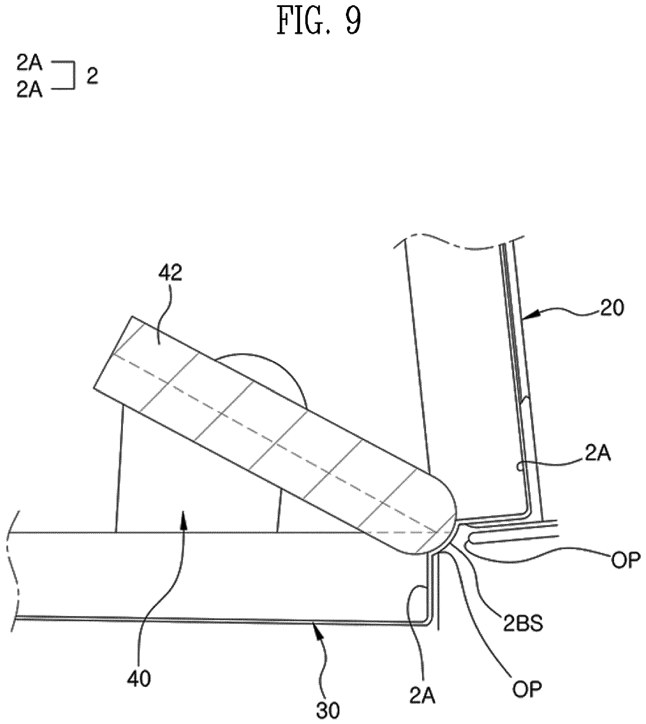

FIG. 9 is an enlarged side view showing a state in which the stopper is in contact with the bending lateral surface of the pouch when forming the pouch by folding the pouch sheet shown in FIG. 7.

### Best Mode

The present disclosure relates to a pouch bending guide apparatus for a secondary battery packaging system which folds a pouch sheet while the bending jig is folded toward the base jig with the pouch sheet placed on a base jig and a bending jig, the apparatus including a bending knife which supports, from the inside of a pouch, a bending lateral surface of the pouch formed while the pouch sheet is folded by the bending jig, wherein the bending knife is provided with a stopper, and while the pouch sheet is folded by the bending jig, the bending knife moves toward the inside of the pouch sheet such that a stopper supports the inner surface of the bending lateral surface of the pouch.

### Mode for Invention

The present disclosure relates to a pouch bending guide apparatus for a secondary battery packaging system which folds a pouch sheet 2A while the bending jig 20 is folded toward the base jig 30 with the pouch sheet 2A placed on a base jig 30 and a bending jig 20. The pouch bending guide apparatus of the present disclosure is provided with a bending knife 40 as a main part which supports, from the inside of a pouch, a bending lateral surface 2BS of the pouch 2 formed while the pouch sheet 2A is folded by the bending jig 20 such that the bending lateral surface 2BS of the pouch 2 is prevented from being pushed concavely inward, wherein the bending knife 40 is provided with a stopper 42 which supports the bending lateral surface 2BS from the inner surface of the pouch.

The inner surface of the base jig 30 is disposed to be directed upward. The base jig 30 is formed to have the shape of a rectangular plate. The inner surface of the base jig 30 is provided with a pouch battery cell receiving part seating groove having the shape of a concave half groove. The pouch sheet 2A for forming the pouch 2 in which a battery cell is mounted includes two half battery cell receiving parts relative to the center of the pouch sheet 2A, and each of the half battery cell receiving parts of the pouch has the shape of a rectangular groove protruding outward from the pouch sheet 2A, and thus a half pouch battery cell receiving part seating groove of the base jig 30 is formed to have the shape of a rectangular groove such that the half battery cell receiving part is seated in the half pouch battery cell receiving part seating groove.

The bending jig 20 is supported by a support frame and is folded toward or unfolded from the inner surface of the base jig 30 by a bending operation unit (not shown). Even the inner surface of the bending jig 20 is provided with a concave half pouch battery cell receiving part seating groove. The pouch battery cell receiving part seating groove of the bending jig 20 also has the shape of a rectangular groove.

The base jig 30 is mounted to the support frame, and side walls of the base jig 30 and the bending jig 20 are coupled to each other by a hinge part. The inner surface of the base jig 30 and the bending jig 20 are disposed to face each other by folding the bending jig 20 toward the inner surface of the base jig 30, and the bending jig 20 is unfolded outward from the inner surface of the base jig 30. Each of the base jig 30 and the bending jig 20 is formed to have the shape of a plate having a pouch battery cell receiving part seating groove provided therein. The bending jig 20 is folded toward and unfolded from the base jig 30 relative to the hinge part.

While the bending jig 20 is unfolded from the base jig 30, the inner surface of the bending jig 20 is disposed to be directed upward.

A vacuum suction passage is formed inside each of the base jig 30 and the bending jig 20, and a plurality of vacuum suction holes communicating with the vacuum suction passage is formed in each of the inner surfaces of the base jig 30 and the bending jig 20 facing each other. The vacuum suction holes of the base jig 30 are connected with the vacuum suction passage of the inside of the base jig 30 and are open to the inner surface of the base jig 30. Additionally, the vacuum suction holes of the bending jig 20 are also connected with the vacuum suction passage of the inside of the bending jig 20 and are open to the inner surface of the bending jig 20.

The outer surface of the pouch sheet 2A placed on the inner surfaces of the base jig 30 and the bending jig 20 is disposed to face the vacuum suction holes of the base jig 30 and the vacuum suction holes of the bending jig 20.

The vacuum suction passage of the inside of the base jig 30 and the vacuum suction holes thereof, and the vacuum suction passage of the inside of the bending jig 20 and the vacuum suction holes thereof are connected with a vacuum device, which is not shown, by a connecting hose, a vacuum connection block, and a vacuum pressure charging block. Air is suctioned through the vacuum suction holes of the inner surface of the base jig 30 and the vacuum suction holes of the inner surface of the bending jig 20 by the vacuum device such that the pouch sheet 2A can be in close contact with the inner surface of the base jig 30 and the inner surface of the bending jig 20 by vacuum.

The vacuum device is connected with the vacuum suction passages of the base jig 30 and the bending jig 20 by a connection means such as a hose not shown, and while the pouch sheet 2A is suctioned on the base jig 30 and the bending jig 20 by the operation of the vacuum device, the bending jig 20 is folded toward or unfolded from the base jig 30 relative to the hinge part. Of course, the folding and unfolding operations of the bending jig 20 toward the base jig 30 may be performed by a bending operation means not shown. The bending operation means may use a known device such as a cylinder, and thus a detailed description thereof will be omitted.

The pouch sheet 2A is placed on the base jig 30 and the bending jig 20, and a battery cell is received in a half battery cell receiving part disposed on the base jig 30 among the pair of half battery cell receiving parts of the pouch sheet 2A, and while the two half battery cell receiving parts of the pouch sheet 2A are seated respectively in the pouch battery cell receiving part seating groove inside the base jig 30 and the pouch battery cell receiving part seating groove of the bending jig 20, the pouch sheet 2A is folded while the bending jig 20 is folded toward the base jig 30, and after the pouch sheet 2A is folded, the pouch 2 having the battery cell mounted in the half battery cell receiving part inside the pouch 2 is formed. Of course, while the two half battery cell receiving parts of the pouch sheet 2A are empty without battery cells, the pouch 2 may be formed by folding the pouch sheet 2A in half relative to the center of the pouch sheet 2A, and one side surface of even a pouch 2 without battery cells is formed as a folding side surface.

In this case, one side wall of the base jig 30 and one side wall of the bending jig 20 are connected to each other by the hinge part, and a bending guide opening part OP is formed on each of the side walls of the base jig 30 and the bending jig 20 such that the inner and outer surfaces of the side wall communicate with each other. The bending guide opening part OP is formed on each of the one side wall of the base jig 30 and the one side wall of the bending jig 20. The bending guide opening part OP is formed by passing through the side wall of each of the base jig 30 and the bending jig 20 from one side surface of the pouch battery cell receiving part seating groove formed inside each of the base jig 30 and the bending jig 20. The bending guide opening parts OP may be considered as guide holes to guide the bending lateral surface 2BS of the pouch 2 to be pushed to the outside when the stopper 42 to be described later pushes the inner surface of the bending lateral surface such that the bending lateral surface 2BS of the pouch 2 is prevented from being pushed to the inside of the pouch 2.

The pouch bending guide apparatus of the present disclosure is provided with the bending knife 40 which supports the bending lateral surface 2BS of the pouch 2 from the inside thereof when the pouch sheet 2A is folded.

When the base jig 3 and the bending jig 20 stop after moving along a movement path, the bending jig 20 is folded toward the base jig 30. In a case in which the movement path is a track, when the base jig 30 and the bending jig 20 stop after moving along the track, the bending jig 20 is folded toward the base jig 30. In a case in which the movement path is a turntable, when the base jig 30 and the bending jig 20 mounted to the turntable stop after moving according to the rotation of the turntable, the bending jig 20 is folded toward the base jig 30.

A bending knife frame 50 is disposed at a side of the movement path. When the movement path is a turntable, the bending knife frame 50 is disposed next to the turntable. A lift drive motor 54 is mounted to the bending knife frame 50. The motor shaft of the lift drive motor 54 is arranged in a vertical direction. The motor shaft of the lift drive motor 54 is provided with a lifting ball screw.

The bending knife frame 50 is provided with an LM guide. The LM guide is provided with a guide rail and a guide rail block, and the guide rail is arranged in a direction perpendicular to the bending knife frame 50. The guide rail block is coupled slidably to the guide rail. When the bending knife frame 50 is seen from the front, the guide rail is seen to include a pair of guide rails arranged respectively at left and right sides to be in parallel to each other.

A bending knife support frame 60 is coupled to the bending knife frame 50. The bending knife support frame 60 is coupled to the bending knife frame 50 such that the bending knife support frame 60 is moved upward and downward by the LM guide. The bending knife frame 50 is coupled to the guide rail block of the LM guide, and the bending knife support frame 60 is coupled to the bending knife frame 50 to move upward and downward.

The bending knife support frame 60 is provided with a lift ball screw nut. The lift ball screw nut is preferably provided on the center part of the lower surface of the bending knife support frame 60. The motor shaft of the lift drive motor 54 provided on the bending knife frame 50 is provided with the lifting ball screw, and the lifting ball screw nut provided in the bending knife support frame 60 is coupled to the lifting ball screw. Accordingly, as the motor shaft of the drive motor rotates, the bending knife support frame 60 may be raised and lowered on the bending knife frame 50 by the lifting ball screw and the lift ball screw nut.

The bending knife support frame 60 is provided with an LM guide. An inclined frame 62 is provided on the upper part of the bending knife support frame 60. When seen from the side of the bending knife support frame 60, the front end part of the inclined frame 62 is disposed to be lower than a base end part. That is, the rear side of the inclined frame 62 is disposed to be inclined such that the rear side of the inclined frame is raised higher than the front side thereof. The inclined frame 62 is provided with an LM guide. The LM guide provided on the inclined frame 62 is composed of a pair of guide rails and a guide rail block. When seen from the upper side of the inclined frame 62, the pair of guide rails disposed side by side at left and right sides is provided in the inclined frame 62. The pair of guide rails extends along the longitudinal direction of the inclined frame 62. The guide rail block is coupled slidably to the pair of guide rails.

The drive motor 64 is mounted to the base end part of the inclined frame 62. Since the inclined frame 62 is a component of the bending knife support frame 60, the drive motor 64 is configured to be mounted to the bending knife support frame 60. The motor shaft of the drive motor 64 is provided with a ball screw. The ball screw BS provided in the motor shaft of the drive motor 64 extends along the longitudinal direction of the inclined frame 62.

A moving frame is coupled to the LM guide provided in the inclined frame 62 of the bending knife support frame 60. The moving frame is coupled to the guide rail block coupled slidably to the guide rails of the inclined frame 62. The moving frame may slide on the inclined frame 62 of the bending knife support frame 60 due to the LM guide. That is, the moving frame may move forward and rearward on the inclined frame 62 of the bending knife support frame 60. The moving frame is configured to move forward and rearward at an inclined state on the bending knife support frame 60.

The drive motor 64 is mounted to the inclined frame 62, and the motor shaft of the drive motor 64 is provided with the ball screw BS, and the moving frame is provided with the ball screw nut BSN, and the ball screw nut BSN is coupled to the ball screw BS. Accordingly, as the motor shaft and ball screw BS of the drive motor 64 mounted to the inclined frame 62 rotate, the ball screw nut BSN moves rectilinearly along the ball screw BS such that the moving frame can move to the front and rear sides of the inclined frame 62. The moving frame may move forward and rearward at an inclined state thereof on the bending knife support frame 60.

The moving frame is provided with the bending knife 40. The bending knife 40 is formed to have a plate shape. The bending knife 40 is mounted to the moving frame and thus is disposed to be inclined such that the front side of the bending knife 40 is lower than the rear side thereof. In this case, the front lower surface of the bending knife 40 is formed as a horizontal surface. When the bending knife 40 is seen from a side thereof in a state in which the bending knife 40 is coupled to the moving frame, the front lower surface of the bending knife 40 is formed as a horizontal surface.

The bending knife 40 is provided with the stopper 42 so as to support the inner surface of the bending lateral surface 2BS of the pouch 2. The bending knife 40 includes a stopper seating groove such that the inside of the stopper seating groove and the upper surface of the bending knife communicate with each other, and the stopper 42 is seated in and coupled to the stopper seating groove. The stopper 42 protrudes more forward than the front of the bending knife 40. The front end part of the stopper 42 may be formed as a curved surface or a flat surface. The bending guide opening part OP is formed in each of the side walls of the base jig 30 and the bending jig 20 such that the inner and outer surfaces of the side wall communicate with each other, and the stopper 42 may be configured to have a width equal to or slightly smaller than the width of the bending guide opening part OP.

Meanwhile, according to the present disclosure, there is proposed a pouch bending method for a secondary battery packaging system, the method including: bending the pouch by folding the pouch sheet 2A while the bending jig 20 is folded toward the base jig 30 with the pouch sheet 2A placed on the base jig 30 and the bending jig 20; and supporting the bending lateral surface 2BS of the pouch 2 formed while the pouch sheet 2A is bent, from the inside of the pouch 2, by moving the bending knife 40 toward the inside of the pouch sheet 2A folded while the pouch sheet 2A is folded by the bending jig 20.

According to the pouch bending guide apparatus of the present disclosure having the above configuration, the bending knife 40 is provided with the stopper 42, and while the pouch sheet 2A is folded by the bending jig 20, the bending knife 40 is moved to the inside of the pouch sheet 2A such that the stopper 42 supports the inner surface of the bending lateral surface 2BS of the pouch 2.

Specifically, the base jig 30 and the bending jig 20 are unfolded relative to the hinge part by which the base jig 30 and the bending jig 20 are connected to each other, and the pouch sheet 2A is unfolded on the unfolded inner surfaces of the base jig 30 and the bending jig 20, and in this state, when the bending jig 20 is folded toward the base jig 30 relative to the hinge part, the pouch sheet 2A, which is unfolded, is also folded in half. This is the bending of the pouch.

When the bending jig 20 and a half pouch sheet 2A are folded toward the base jig 30 and a remaining half pouch sheet 2A, the bending knife 40 moves forward to the inside of the folding pouch sheet 2A. As the motor shaft and ball screw of the drive motor mounted to the inclined frame 62 of the bending knife support frame 60 rotate in one direction, the moving frame is moved forward by the ball screw nut and the ball screw, and the bending knife 40 mounted to the moving frame is moved forward to be moved to the inside of the pouch sheet 2A. With the bending jig 20 folded toward the base jig 30 at least in an acute angle, the bending knife 40 moves forward to the inside of the pouch sheet 2A.

The bending knife 40 moves to the inside of the folding pouch sheet 2A, and the stopper 42 provided on the bending knife 40 supports the bending lateral surface 2BS of the pouch 2 from the inner surface of the pouch 2. The area of the bending lateral surface 2BS of the pouch 2 pushed by the stopper 42 during the bending of the pouch 2 is increased such that the stopper 42 pushes many areas of the bending lateral surface 2BS. This is supporting the bending lateral surface of the pouch.

Accordingly, since the stopper 42 supports the bending lateral surface 2BS of the pouch 2 from the inner surface thereof, the bending lateral surface 2BS of the pouch 2 is prevented from being pushed inward. The front end part of the stopper 42 may be formed as a curved surface or a flat surface, and the curved or flat surface of the stopper 42 supports the bending lateral surface 2BS of the pouch 2 from the inside of the pouch 2. In this case, the bending guide opening part OP is formed in one side wall of each of the base jig 30 and the bending jig 20 such that the inner and outer surfaces of the side wall communicate with each other, and the stopper 42 of the bending knife 40 pushes the bending lateral surface 2BS of the pouch 2 outward through the bending guide opening parts, so the bending lateral surface 2BS of the pouch 2 can be prevented from being pushed inward. The stopper 42 pushes the bending lateral surface 2BS outward, and thus the pouch 2 in which the bending lateral surface 2BS is prevented from being pushed inward is formed.

Meanwhile, in a state in which the bending jig 20 and the half pouch sheet 2A are folded to be close to the upper surface of the bending knife 40, the bending knife 40 and the stopper 42 move rearward out of the bending jig 20 and the half pouch sheet 2A. As the motor shaft and ball screw BS of the drive motor 64 mounted to the inclined frame 62 of the bending knife support frame 60 rotate in different directions, the moving frame is moved rearward by the ball screw nut BSN and the ball screw BS, and the bending knife 40 and the stopper 42 mounted to the moving frame are moved rearward to be moved to the outside of the pouch sheet 2A from the inside thereof. While the bending jig 20 and the half pouch sheet 2A are folded to be close to the upper surface of the bending knife 40, the bending lateral surface 2BS of the pouch 2 is prevented from being pushed to the inside of the pouch 2. Accordingly, in the state in which the bending jig 20 and the half pouch sheet 2A are folded to be close to the upper surface of the bending knife 40, the bending knife 40 and the stopper 42 move rearward out of the bending jig 20 and the half pouch sheet 2A. After the bending knife 40 and the stopper 42 move out of the bending jig 20 and the half pouch sheet 2A, the bending jig 2 and the half pouch sheet 2A are completely folded toward the base jig 30 and the remaining half pouch sheet 2A, so that the pouch 2 in which the two half pouch sheets 2A are laid on each other can be formed.

Accordingly, in the pouch bending guide apparatus of the present disclosure, while folding and bending the center part of the pouch sheet 2A, the center part of the pouch sheet 2A is prevented from being pushed inward, thereby preventing the bending lateral surface 2BS of the pouch 2 from being deformed concavely inward. That is, when the pouch sheet 2A is folded, the bending lateral surface 2BS of the pouch 2 is prevented from being pushed inward and collapsing into a concave shape.

In a conventional technology, as for a battery without a bottom, when the pouch 2 is bent, the pouch 2 is moved into the main chamber, resulting in the problem that the size of the main chamber decreases.

However, in the pouch bending guide apparatus of the present disclosure, the stopper 42 is coupled to the knife and the jigs (that is, the base jig 30 and the bending jig 20) and prevents the pouch 2 from being pushed into the main chamber. That the pouch 2 is pushed into the main chamber means that the bending lateral surface 2BS on one side of the pouch 2 is pushed into the pouch 2 when forming the pouch 2 by folding the pouch sheet 2A. According to the present disclosure, during the bending of the pouch 2, the pouch 2 is prevented from being moved into the main chamber, thereby preventing the size of the main chamber of the pouch 2 from decreasing.

The bending lateral surface 2BS of the pouch 2 is prevented from being pushed inward, thereby improving the exterior quality and reliability of the pouch 2.

In addition, the pouch bending guide apparatus of the present disclosure solves the problem that heat generated during the charging/discharging of the battery cells of a secondary battery is not efficiently discharged when the bending lateral surface 2BS of the pouch 2 having battery cells mounted therein is deformed concavely inward. A plurality of pouches 2 having battery cells mounted therein (hereinafter, referred to as the pouch 2 for convenience) is placed by standing side by side on a hanger frame, and the bending lateral surface 2BS of each of the pouches 2 is in contact with a heat sink provided on the lower part of the hanger frame. In this state, heat generated in the pouch 2 during the charging/discharging of the battery cell is transmitted from the bending lateral surface 2BS to the heat sink to be discharged. The pouch 2 does not have a concave deformation part formed in such a manner that the bending lateral surface 2BS of the pouch 2 is recessed inward, and thus the bending lateral surface of the pouch 2 is not prevented from being efficiently in contact with the heat sink. The bending lateral surface of the pouch 2 is at least formed to protrude or be flat at the side of the pouch 2, and thus the bending lateral surface 2BS of the pouch 2 is securely in contact with the heat sink, and accordingly, heat generated in the pouch 2 during the charging/discharging of the battery cell is efficiently transmitted from the bending lateral surface 2BS to the heat sink, thereby efficiently discharging heat generated inside the pouch 2 during the charging/discharging of the battery cell.

In addition, heat discharge from the pouch 2 is efficiently performed, thereby preventing the battery cell from deteriorating or burning due to heat.

Furthermore, according to the present disclosure, the bending knife 40 is mounted to the bending knife support frame 60, and the bending knife support frame 60 is mounted to a bending guide frame such that the bending knife support frame 60 can be moved upward and downward, and thus the vertical position of the bending knife 40 and the vertical position of the stopper 42 of the bending knife 40 can be adjusted according to working conditions, thereby further facilitating the bending of the pouch 2.

Additionally, the front lower surface of the bending knife 40 is configured as a horizontal surface, and thus when the bending knife 40 moves to and from the inside of the folding pouch sheet 2A, the front lower surface of the bending knife 40 is prevented from being held in the pouch sheet 2A, thereby further facilitating the formation of the pouch 2 by bending the pouch sheet 2A.

### Industrial Applicability

The present disclosure relates to the pouch bending guide apparatus, for a secondary battery packaging system, which folds the pouch sheet while the bending jig is folded toward the base jig with the pouch sheet placed on the base jig and the bending jig, the apparatus including: the bending knife which supports, from the inside of the pouch, the bending lateral surface of the pouch formed while the pouch sheet is folded by the bending jig and has industrial applicability.

## Claims

1. A pouch bending guide apparatus, suitable for a secondary battery packaging system, the apparatus comprising:
a base jig (30) having an inner surface which is disposed to be directed upward;
a bending jig (20) having an inner surface which can be folded toward or unfolded from the inner surface of the base jig (30);
a pouch (2) comprising a pouch sheet (2A) which forms a bending lateral surface (2BS) while the bending jig (20) is folded toward the base jig (30);
and
a bending knife (40) comprising a stopper which is configured to support an inner surface of the bending lateral surface (2BS),
wherein
the apparatus comprises a bending guide opening part (OP) formed in each of side walls of the base jig (30) and the bending jig (20) such that inner and outer surfaces of the side walls communicate with each other; and
the stopper (42) is formed to have a front end part, which is formed as a curved surface or a flat surface, and is configured to push the bending lateral surface (2BS) outward through the bending guide opening part (OP).

2. The apparatus of claim 1, wherein the bending knife (40) is configured to be moved toward an inside of the pouch sheet (2A) by a movement means such that the stopper (42) prevents movement of the bending lateral surface (2BS) to an inside of a pouch (2).

3. The apparatus of claim 2, wherein the bending knife (40) is disposed to be inclined, and when the bending jig (20) and the pouch sheet (2A) are folded, the inclined bending knife (40) is configured to be moved toward the inside of the pouch sheet (2A) by the movement means.

4. The apparatus of claim 1, wherein one side wall of the base jig (30) and one side wall of the bending jig (20) are connected to each other by a hinge part, and the bending guide opening part (OP) is formed in each of the side walls of the base jig (30) and the bending jig (20) such that the inner and outer surfaces of the side wall communicate with each other.

5. The apparatus of claim 1, wherein the pouch sheet (2A) is placed on the base jig (30) and the bending jig (20), and in a state in which a battery cell is received in a half battery cell receiving part disposed on the base jig (30) among a pair of half battery cell receiving parts of the pouch sheet (2A), the pouch sheet (2A) is folded while the bending jig (20) is folded toward the base jig (30), and after the pouch sheet (2A) is folded, the pouch (2) having the battery cell mounted in the half battery cell receiving part inside the pouch (2) is formed, wherein the bending knife (40) is configured to move to an inside of the pouch sheet (2A) and to support the bending lateral surface (2BS) of the pouch (2) from an inside of the pouch (2) while the pouch sheet (2A) is folded.

6. The apparatus of claim 1, wherein a vacuum suction passage is formed inside each of the base jig (30) and the bending jig (20), and a plurality of vacuum suction holes communicating with the vacuum suction passage is formed in each of the inner surfaces of the base jig (30) and the bending jig (20) facing each other.

7. The apparatus of claim 6, wherein in a state in which the pouch sheet (2A) placed on the inner surfaces of the base jig (30) and the bending jig (20) is vacuum-suctioned by the vacuum suction holes of the base jig (30) and the bending jig (20), the pouch sheet (2A) is folded in half by folding the bending jig (20) toward the inner surface of the base jig (30), and thus the pouch (2) is formed, and a battery cell is mounted in a battery cell receiving part inside the pouch (2).

8. A pouch bending method for a secondary battery packaging system, the method comprising:
bending a pouch (2) by folding a pouch sheet (2A) while a bending jig (20) is folded toward a base jig (30) with the pouch sheet (2A) placed on the base jig (30) and the bending jig (20); and
supporting a bending lateral surface (2BS) of the pouch (2) formed while the pouch sheet (2A) is bent, from an inside of the pouch (2), by moving a bending knife (40) toward an inside of the pouch sheet (2A) folded while the pouch sheet (2A) is folded by the bending jig (20),
wherein the base jig (30) has an inner surface which is disposed to be directed upward,
the bending jig (20) has an inner surface which can be folded toward or unfolded from the inner surface of the base jig (30),
the pouch (2) comprises the pouch sheet (2A) which forms the bending lateral surface (2BS) while the bending jig (20) is forded toward the base jig (30),
a bending guide opening part (OP) is formed in each of side walls of the base jig (30) and the bending jig (20) such that inner and outer surfaces of the side wall communicate with each other,
the bending knife (40) comprises a stopper (42) which is configured to support an inner surface of the bending lateral surface (2BS), and
the stopper (42) is formed to have a front end part, which is formed as a curved surface or a flat surface, and is configured to push the bending lateral surface (2BS) outward through the bending guide opening part (OP).

## Patentansprüche

1. Beutelbiegeführungsvorrichtung, die für ein Sekundärbatteriepacksystem geeignet ist, wobei die Vorrichtung aufweist:
eine Basisvorrichtung (30), die eine Innenfläche hat, die angeordnet ist, nach oben gerichtet zu sein;
eine Biegevorrichtung (20), die eine Innenfläche hat, die zu der Innenfläche der Basisvorrichtung (30) hin zusammengeklappt oder davon auseinandergeklappt werden kann;
einen Beutel (2), der eine Beutelfolie (2A) aufweist, die eine Biegeseitenfläche (2BS) bildet während die Biegevorrichtung (20) zu der Basisvorrichtung (30) hin gefaltet wird;
und
eine Biegeklinge (40), die einen Anschlag aufweist, der dazu konfiguriert ist, eine Innenfläche der Biegeseitenfläche (2BS) abzustützen,
wobei
die Vorrichtung einen Biegeführungsöffnungsteil (OP) aufweist, der in jeder von Seitenwänden der Basisvorrichtung (30) und der Biegevorrichtung (20) so gebildet ist, dass Innenflächen und Außenflächen der Seitenflächen miteinander kommunizieren; und
der Anschlag (42) geformt ist, einen vorderen Endteil zu haben, der als eine gekrümmte Fläche oder ebene Fläche geformt ist und dazu konfiguriert ist, die Biegeseitenfläche (2BS) durch den Biegeführungsöffnungsteil (OP) nach außen zu drücken.

2. Vorrichtung nach Anspruch 1, wobei die Biegeklinge (40) dazu konfiguriert ist, durch ein Bewegungsmittel so zu einem Inneren der Beutelfolie (2A) hin bewegt zu werden, dass der Anschlag (42) eine Bewegung der Biegeseitenfläche (2BS) zu dem Inneren eines Beutels (2) verhindert.

3. Vorrichtung nach Anspruch 2, wobei die Biegeklinge (40) angeordnet ist, geneigt zu sein, und wenn die Biegevorrichtung (20) und die Beutelfolie (2A) zusammengeklappt werden, die geneigte Biegeklinge (40) dazu konfiguriert ist, durch das Bewegungsmittel zu dem Inneren der Beutelfolie (2A) hin bewegt zu werden.

4. Vorrichtung nach Anspruch 1, wobei eine Seitenwand der Basisvorrichtung (30) und eine Seitenwand der Biegevorrichtung (20) durch ein Scharnierteil miteinander verbunden sind, und der Biegeführungsöffnungsteil (OP) in jeder von den Seitenwänden der Basisvorrichtung (30) und der Biegevorrichtung (20) so geformt ist, dass die Innen- und Außenflächen der Seitenwand miteinander kommunizieren.

5. Vorrichtung nach Anspruch 1, wobei die Beutelfolie (2A) auf der Basisvorrichtung (30) und der Biegevorrichtung (20) platziert ist, und in einem Zustand, in dem eine Batteriezelle in einem auf der Basisvorrichtung (30) angeordneten Halb-Batteriezelle-Aufnahmeteil von einem Paar von Halb-Batteriezelle-Aufnahmeteilen der Biegefolie (2A) aufgenommen ist, die Beutelfolie (2A) gefaltet wird während die Biegevorrichtung (20) zu der Basisvorrichtung (30) hin zusammengeklappt wird, und nachdem die Beutelfolie (2A) gefaltet ist, der Beutel (2), der die in dem Halb-Batteriezelle-Aufnahmeteil innerhalb des Beutels (2) montierte Batteriezelle hat, gebildet wird, wobei die Biegeklinge (40) dazu konfiguriert ist, sich zu einem Inneren der Beutelfolie (2A) zu bewegen und die Biegeseitenfläche (2BS) des Beutels (2) von einem Inneren des Beutels (2) abzustützen während die Beutelfolie (2A) gefaltet wird.

6. Vorrichtung nach Anspruch 1, wobei eine Vakuumansaugpassage innerhalb von jeder von der Basisvorrichtung (30) und der Biegevorrichtung (20) gebildet ist, und eine Mehrzahl von Vakuumansauglöchern, die mit der Vakuumansaugpassage kommunizieren, in jeder von den Innenflächen der Basisvorrichtung (30) und der Biegevorrichtung (20), die einander zugewandt sind, gebildet sind.

7. Vorrichtung nach Anspruch 6, wobei in einem Zustand, in dem die auf der Innenfläche der Basisvorrichtung (30) und der Biegevorrichtung (20) platzierte Beutelfolie (2A) durch die Vakuumansauglöcher der Basisvorrichtung (30) und der Biegevorrichtung (20) mit Vakuum angesaugt wird, die Beutelfolie (2A) durch zusammenklappen der Biegevorrichtung (20) zu der Innenfläche der Basisvorrichtung (30) hin halb gefaltet wird und somit der Beutel (2) geformt wird, und eine Batteriezelle in einen Batteriezellenaufnahmeteil innerhalb des Beutels (2) montiert wird.

8. Beutelbiegeverfahren für ein Sekundärbatteriepacksystem, wobei das Verfahren umfasst:
Biegen eines Beutels (2) durch Falten einer Beutelfolie (2A), während eine Biegevorrichtung (20) mit der auf der Basisvorrichtung (30) und der Biegevorrichtung (20) platzierten Beutelfolie (2A) zu einer Basisvorrichtung (30) hin zusammengeklappt wird; und
Abstützen einer Biegeseitenfläche (2BS) des Beutels (2), die während des Biegens der Beutelfolie (2A) gebildet wird, von einem Inneren des Beutels (2) durch Bewegen einer Biegeklinge (40) zu einem Inneren der Beutelfolie (2A), die während des Faltens der Beutelfolie (2A) durch die Biegevorrichtung (20) gefaltet wird,
wobei
die Basisvorrichtung (30) eine Innenfläche hat, die angeordnet ist, nach oben gerichtet zu sein,
die Biegevorrichtung (20) eine Innenfläche hat, die zu der Innenfläche der Basisvorrichtung (30) hin zusammengeklappt oder davon auseinandergeklappt werden kann,
der Beutel (2) eine Beutelfolie (2A) aufweist, die die Biegeseitenfläche (2BS) bildet während die Biegevorrichtung (20) zu der Basisvorrichtung (30) hin gefaltet wird,
ein Biegeführungsöffnungsteil (OP) in jeder der Seitenwände der Basisvorrichtung (30) und der Biegevorrichtung (20) so gebildet ist, dass Innen- und Außenflächen der Seitenwand miteinander kommunizieren,
die Biegeklinge (40) einen Anschlag (42) aufweist, der dazu konfiguriert ist eine Innenfläche der Biegeseitenfläche (2BS) abzustützen, und
der Anschlag (42) gebildet ist, um einen vorderen Endteil zu haben, der als eine gekrümmte Fläche oder ebene Fläche geformt ist und dazu konfiguriert ist, die Biegeseitenfläche (2BS) durch den Biegeführungsöffnungsteil (OP) nach außen zu drücken.

## Revendications

1. Appareil de guidage de pliage de poche, approprié pour un système d'emballage de batterie secondaire, l'appareil comprenant :
un outil de base (30) ayant une surface interne qui est disposée pour être dirigée vers le haut,
un outil de pliage (20) ayant une surface interne qui peut être pliée vers ou dépliée de la surface interne de l'outil de base (30),
une poche (2) comprenant une feuille de poche (2A) qui forme une surface latérale de pliage (2BS) tandis que l'outil de pliage (20) est plié vers l'outil de base (30),
et
un couteau de pliage (40) comprenant une butée qui est configurée pour supporter une surface interne de la surface latérale de pliage (2BS),
où
l'appareil comprend une partie d'ouverture de guidage de pliage (OP) formée dans chacune des parois latérales de l'outil de base (30) et de l'outil de pliage (20) de telle sorte que les surfaces interne et externe des parois latérales communiquent l'une avec l'autre, et
la butée (42) est formée pour avoir une partie d'extrémité avant, qui est formée comme une surface incurvée ou une surface plate, et est configurée pour pousser la surface latérale de pliage (2BS) vers l'extérieur à travers la partie d'ouverture de guidage de pliage (OP).

2. Appareil selon la revendication 1, où le couteau de pliage (40) est configuré pour être déplacé vers un intérieur de la feuille de poche (2A) par un moyen de déplacement de telle sorte que la butée (42) empêche le déplacement de la surface latérale de pliage (2BS) vers un intérieur d'une poche (2).

3. Appareil selon la revendication 2, où le couteau de pliage (40) est disposé pour être incliné, et lorsque l'outil de pliage (20) et la feuille de poche (2A) sont pliés, le couteau de pliage incliné (40) est configuré pour être déplacé vers l'intérieur de la feuille de poche (2A) par le moyen de déplacement.

4. Appareil selon la revendication 1, où une paroi latérale de l'outil de base (30) et une paroi latérale de l'outil de pliage (20) sont connectées l'une à l'autre par une partie de charnière, et la partie d'ouverture de guidage de pliage (OP) est formée dans chacune des parois latérales de l'outil de base (30) et de l'outil de pliage (20) de telle sorte que les surfaces interne et externe de la paroi latérale communiquent l'une avec l'autre.

5. Appareil selon la revendication 1, où la feuille de poche (2A) est placée sur l'outil de base (30) et l'outil de pliage (20), et dans un état dans lequel une cellule de batterie est reçue dans une pièce de réception de demi-cellule de batterie disposée sur l'outil de base (30) parmi une paire de pièces de réception de demi-cellule de batterie de la feuille de poche (2A), la feuille de poche (2A) est pliée tandis que l'outil de pliage (20) est plié vers l'outil de base (30), et après que la feuille de poche (2A) est pliée, la poche (2) ayant la cellule de batterie montée dans la pièce de réception de demi-cellule de batterie à l'intérieur de la poche (2) est formée, où le couteau de pliage (40) est configuré pour se déplacer vers un intérieur de la feuille de poche (2A) et pour supporter la surface latérale de pliage (2BS) de la poche (2) depuis un intérieur de la poche (2) tandis que la feuille de poche (2A) est pliée.

6. Appareil selon la revendication 1, où un passage d'aspiration sous vide est formé à l'intérieur de chacun de l'outil de base (30) et de l'outil de pliage (20), et une pluralité de trous d'aspiration sous vide communiquant avec le passage d'aspiration sous vide est formée dans chacune des surfaces internes de l'outil de base (30) et de l'outil de pliage (20) se faisant face.

7. Appareil selon la revendication 6, où dans un état dans lequel la feuille de poche (2A) placée sur les surfaces internes de l'outil de base (30) et de l'outil de pliage (20) est aspirée sous vide par les trous d'aspiration sous vide de l'outil de base (30) et de l'outil de pliage (20), la feuille de poche (2A) est pliée en deux en pliant l'outil de pliage (20) vers la surface interne de l'outil de base (30), et ainsi la poche (2) est formée, et une cellule de batterie est montée dans une pièce de réception de cellule de batterie à l'intérieur de la poche (2).

8. Procédé de pliage de poche pour un système d'emballage de batterie secondaire, le procédé comprenant :
plier une poche (2) en pliant une feuille de poche (2A) tandis qu'un outil de pliage (20) est plié vers un outil de base (30) avec la feuille de poche (2A) placée sur l'outil de base (30) et l'outil de pliage (20), et
supporter une surface latérale de pliage (2BS) de la poche (2) formée tandis que la feuille de poche (2A) est pliée, depuis un intérieur de la poche (2), en déplaçant un couteau de pliage (40) vers un intérieur de la feuille de poche (2A) pliée tandis que la feuille de poche (2A) est pliée par l'outil de pliage (20),
où l'outil de base (30) a une surface interne qui est disposée pour être dirigée vers le haut,
l'outil de pliage (20) a une surface interne qui peut être pliée vers ou dépliée de la surface interne de l'outil de base (30),
la poche (2) comprend la feuille de poche (2A) qui forme la surface latérale de pliage (2BS) tandis que l'outil de pliage (20) est plié vers l'outil de base (30),
une partie d'ouverture de guidage de pliage (OP) est formée dans chacune des parois latérales de l'outil de base (30) et de l'outil de pliage (20) de telle sorte que les surfaces interne et externe de la paroi latérale communiquent l'une avec l'autre,
le couteau de pliage (40) comprend une butée (42) qui est configurée pour supporter une surface interne de la surface latérale de pliage (2BS), et
la butée (42) est formée pour avoir une partie d'extrémité avant, qui est formée comme une surface incurvée ou une surface plate, et est configurée pour pousser la surface latérale de pliage (2BS) vers l'extérieur à travers la partie d'ouverture de guidage de pliage (OP).
